Europäisches Patentamt

European Patent Office

Office européen des brevets

(19)

(11) Veröffentlichungsnummer: **0 011 256**

**A1**

(12) # EUROPÄISCHE PATENTANMELDUNG

(21) Anmeldenummer: **79104426.6**

(22) Anmeldetag: **09.11.79**

(51) Int. Cl.³: **B 23 Q 39/04**
**F 16 H 1/00, B 23 Q 1/16**

(30) Priorität: **09.11.78 DE 2848668**

(43) Veröffentlichungstag der Anmeldung:
**28.05.80 Patentblatt 80/11**

(84) Benannte Vertragsstaaten:
**AT BE CH FR GB IT LU NL SE**

(71) Anmelder: **Firma Gottlieb Gühring**
**Jacobstrasse 10-13**
**D-7470 Ebingen(DE)**

(72) Erfinder: **Diener, Herbert, Ing.**
**Am Jausenteich 11**
**D-7470 Albstadt 1(DE)**

(74) Vertreter: **Grupe, Peter, Dipl.-Ing.**
**Patentanwaltsbüro Tiedtke-Bühling-Kinne**
**Gruppe-Pellmann-Dragotti Bavariaring 4**
**D-8000 München 2(DE)**

(54) **Bearbeitungsautomat.**

(57) Bearbeitungsautomat, insbesondere zur Herstellung von Spiralbohrern, Fräsern, Reibahlen oder ähnlichen Werkzeugen mit mehreren, in einem Schalttisch (1) gelagerten Spindeln (2) zur Aufnahme von Werkstücken, die durch Schwenken des Schalttisches von einer Werkstück-Wechselstation über mehrere Bearbeitungsstationen zur Wechselstation zurück fortschaltbar sind, wobei jede der Spindeln mittels eines eigenen Spindelantriebs-Motors (13) antreibbar ist, wobei jeder Spindelantriebs-Motor ortsfest angebracht ist und sein Abtriebsritzel (14) mit einem Treibritzel (16) der zugeordneten Spindle über ein Umlaufzahnrad (15) verbunden ist, das zur Schwenkachse (12) des Schalttisches koaxial gelagert ist und das an jeweils einer Verzahnung mit dem Abtriebsritzel sowie dem Treibritzel kämmt.

Fig 2

EP 0 011 256 A1

0011256

BEZEICHNUNG
siehe Titelseite

Die Erfindung bezieht sich auf einen Bearbeitungsautomaten, insbesondere zur Herstellung von Spiralbohrern,
Fräsern, Reibahlen oder ähnlichen Werkzeugen, gemäß dem
Oberbegriff des Patentanspruchs 1.

Ein Bearbeitungsautomat dieser Art ist als Mehrspindeldrehautomat in der DE-AS 1 265 539 beschrieben. Bei diesem bekannten Automaten werden in einer als Schalttisch
dienenden Spindeltrommel gelagerte Werkstückspindeln jeweils mit eigenen Elektromotoren angetrieben, welche an
der Innenseite einer Befestigungstrommel angeordnet sind,
die Bestandteil der Spindeltrommel ist. Ein derartiger
Aufbau hat den Nachteil, daß bei dem für den Stationenwechsel notwendigen Schaltvorgang einerseits alle Elektromotoren bewegt werden müssen und andererseits die Stromzuführung zu diesen Elektromotoren aufrechterhalten bzw.
wiederhergestellt werden muß. Dies hat zur Folge, daß
die Spindeltrommel entweder nur langsam fortgeschaltet
werden kann oder aber für das Fortschalten ein hoher
Kraftaufwand sowohl zum Schalten als auch zum nachfolgenden Abbremsen notwendig ist. Ferner ergibt die Stromübertragung zu den Elektromotoren beträchtliche Unsicherheiten, da sie notgedrungen über Schleifringe oder Schleifkontakte erfolgen muß, welche bei den jeweiligen Bearbeitungs-Stellungen immer die gleiche Stellung einnehmen, so daß durch Kontaktstörungen aufgrund von Funkenbildung oder dergleichen ein Antrieb oder eine Verstellung der Spindeln nicht gewährleistet ist.

Ferner werden die einzelnen Spindeln von den Elektromotoren über Keilriemen angetrieben. Dies hat zwar den Vorteil einer geringeren Geräuschentwicklung, ergibt jedoch einen gewissen Schlupf zwischen Motor und Spindel, der eine genaue Einstellung und/oder einen genauen Antrieb der Spindel nicht zuläßt.

Ein weiterer Automat der eingangs genannten Art ist in der VDI-Zeitschrift, Band 87, Nr. 31/32 vom 7. August 1943, Seite 489 beschrieben. Im Unterschied zu dem erstgenannten Mehrspindeldrehautomat sind bei diesem Automaten die Spindeln in einer waagrechten Ebene angeordnet. Auch bei diesem Automaten werden für den Spindelantrieb benützte Elektromotoren zusammen mit den Spindeln auf einem als Schalttisch dienenden Drehtisch mitgeführt, so daß sich die gleichen Nachteile wie bei dem vorangehend beschriebenen Automaten ergeben.

In der DE-PS 877 397 ist ein Schalttischautomat mit planetengeschalteten Werkstückaufnahmen beschrieben. Bei diesem Automaten werden die Aufnahmen für die Werkstücke zugleich mit dem Fortschalten zu einer nächsten Bearbeitungsstation selbst geschaltet, d. h. um einen vorbestimmten Drehwinkel geschwenkt. Dabei wird die Schwenkbewegung des Schalttisches über einen einem Planetenantrieb ähnlichen Klinkenmechanismus mit Nockenflächen am Schalttisch entriegelt, durch eine vorbestimmte Schwenkbewegung geschaltet und verriegelt.

Der Erfindung liegt die Aufgabe zugrunde, einen Automaten gemäß dem Oberbegriff des Patentanspruchs 1 zu schaffen, der sich durch hohe Zuverlässigkeit und Genauigkeit der Einstellung und/oder des Antriebs der Spindeln auszeichnet.

Diese Aufgabe wird erfindungsgemäß mit den im kennzeichnenden Teil des Patentanspruchs 1 genannten Mitteln gelöst.

Durch die ortsfeste Anbringung der Motoren werden Unsicherheitsfaktoren wie Kontaktstörungen oder dergleichen ausgeschaltet, während zugleich der die Spindeln tragende Schalttisch bzw. Spindelkopf um das Gewicht der Motoren erleichtert wird, so daß er mit geringem Kraftaufwand schnell geschwenkt und auch ohne größeren Kraftaufwand schnell gebremst werden kann. Das Entfallen der für Schleifringe oder dergleichen notwendigen Reibungskraft bewirkt gleichfalls eine Kraftverminderung beim Schalten. Hinzu kommt die schlupffreie Verbindung zwischen dem Motor und der Spindel durch den Zahneingriff zwischen den Ritzeln an den jeweiligen Wellen über das Umlaufzahnrad, so daß schlupfbedingte Stellungsfehler der Spindeln ausgeschlossen sind.

Gemäß einer vorteilhaften Ausgestaltung der Erfindung ist ein jedes der Umlaufzahnräder mit einer Innenverzahnung und einer Außenverzahnung versehen. Das jeweilige Umlaufzahnrad sitzt dabei zwischen dem Abtriebsritzel des Spindelantriebs-Motors und dem Treibritzel für die Spindel, die jeweils an einer der Verzahnungen kämmen. Für die Herstellung des Automaten ist es dabei vorteilhaft, wenn alle diese Umlaufzahnräder gleiche Durchmesser haben, also einander gleich sind. Vorteilhaft werden diese Umlaufzahnräder unter Zwischensetzen von Lagerkränzen aufeinander gestapelt. Die Festlegung des Stapels erfolgt da-

0011256

bei dadurch, daß äußere bzw. außenliegende Umlaufzahnräder des Stapels an Ringflanschen gelagert werden, die
an der Schwenkachse des Schalttisches und/oder einer
Lagertrommel ausgebildet sind, an der die Spindelantriebs-Motoren befestigt sind und die Schwenkachse des
Schalttisches gelagert ist.

Eine andere vorteilhafte Ausgestaltung der Erfindung
besteht darin, daß jedes Umlaufzahrad einen Zylinder
aufweist, an dessen Enden außen verzahnte Zahnkränze
sitzen, wobei die Zylinder der einzelnen Umlaufzahnräder
zunehmend größere Durchmesser haben, so daß sie koaxial
übereinandergesetzt werden können. Hinsichtlich der Herstellung der Verzahnung der Zahnkränze ist es dabei vorteilhaft, wenn alle Zahnkränze gleichen Außendurchmesser haben. Die Zahnkränze an dem Umlaufzahrad mit dem
Zylinder größten Durchmessers können dabei zu einem
einzigen Zahnkranz zusammengefaßt sein. Die Lagerung der
übereinandergeschobenen bzw. koaxial übereinandergesetzten Zylinder erfolgt vorteilhaft durch zwischengesetzte Zylinderlager. Als weitere Lagerung können zwischen
benachbarte Zahnkränze an den übereinandergeschobenen
Zylindern Scheibenlager gesetzt werden.

Vorteilhaft erfolgt die Steuerung der Spindeln programmiert unter Berücksichtigung der Spindeldrehung,
die sich aus dem Schwenken des Schalttisches beim
Stationswechsel ergibt. Zur Überprüfung des Stellens und/
oder Betreibens der Spindel wird vorteilhaft an jedem
der Spindelantriebs-Motoren ein Meßsystem mit einem
Stellungsgeber und/oder einem Tachogenerator angebracht.
Da damit die Meßsysteme wie die Spindelantriebs-Motoren
ortsfest sind, ergibt dies durch Wegfall eventueller
Störungen an Schleifringen oder dergleichen eine zuverlässige Spindelsteuerung.

0011256

Die Erfindung wird nachstehend anhand von Ausführungsbeispielen unter Bezugnahme auf die Zeichnung näher
erläutert.

Fig. 1    ist eine Draufsicht auf einen
          Bearbeitungsautomaten in einer
          Ausführungsform.

Fig. 2    ist eine Seitenansicht, die teilweise im Schnitt eine erste Ausführungsform einer Spindelstell-
          und -antriebseinrichtung des
          Automaten zeigt.

Fig. 3    ist eine Seitenansicht, die teilweise im Schnitt eine zweite Ausführungsform der Spindelstell- und
          -antriebseinrichtung des Automaten
          zeigt.

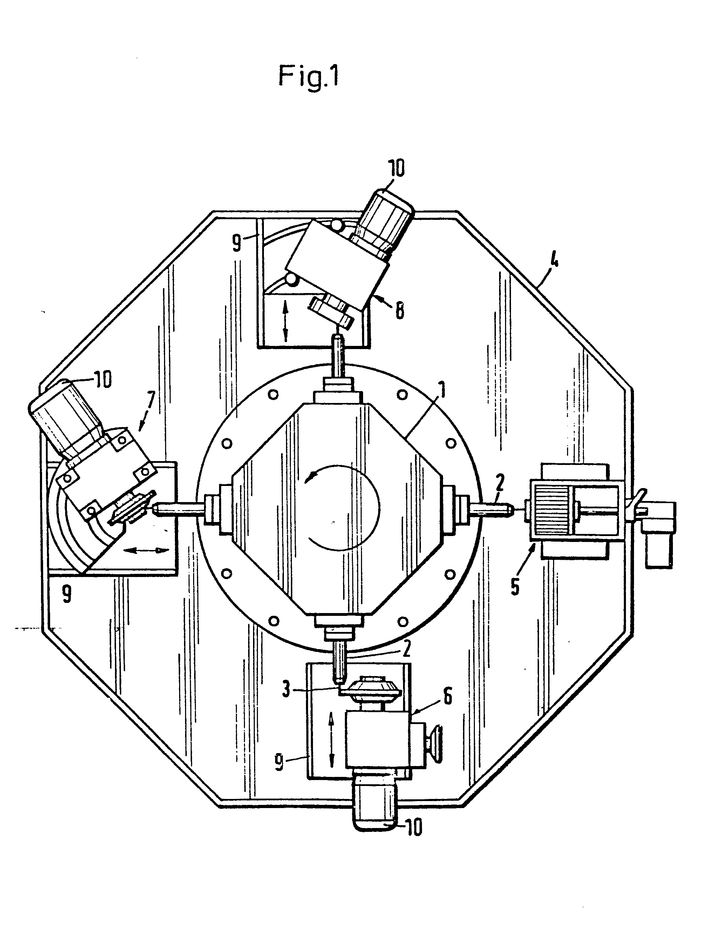

Die Fig. 1 zeigt ein Ausführungsbeispiel eines
Bearbeitungsautomaten, der zum Herstellen von Bohrern
dient. In einem Spindelkopf 1 sind vier Spindeln 2 zur
Aufnahme von Werkstücken 3 so gelagert, daß die Achsen
der Spindeln 2 in einer waagerechten Ebene liegen. Der
Spindelkopf 1 ist um eine zu dieser Ebene senkrechte
Achse so verschwenkbar, daß die bei diesem Ausführungsbeispiel radial von der Achse weg gerichteten Spindeln
zwischen vier Stationen auf einem Arbeitstisch 4 fortschaltbar sind. Als Beispiele für derartige Stationen
sind eine Wechselstation 5 zum Einführen eines unbearbeiteten Werkstücks 3 in die Spindel und zur Entnahme
eines fertig bearbeiteten Werkstücks 3 aus der Spindel,
eine Hinterschleif-Station 6, eine Nutenschleif-Station
7 und eine Spitzenschleif-Station 8 gezeigt. Diese Bearbeitungs-Stationen 6 bis 8 haben jeweilige Zustelleinrichtungen 9, mit denen relativ zu dem Werkstück in der Spindel 2 entsprechende Werkzeuge wie in diesem Beispiel Schleifscheiben bewegt werden, welche durch zugeordnete Werkzeugantriebs-Motoren 10 angetrieben werden.

Bei diesem Ausführungsbeispiel stehen die Spindeln 2 am Spindelkopf 1 radial zur Schwenkachse desselben in einer Ebene. Je nach Art und Ausmaßen der Stationen und der notwendigen Zugänglichkeit zum Einstellen bzw. Justieren oder Überprüfen können die Achsen der Spindel 2 jedoch auch tangential zu einem Kreis um die Schwenkachse des Spindelkopfs 1 in einer Ebene angeordnet sein, radial in einer Kegelfläche liegen, deren Achse die Schwenkachse des Spindelkopfs ist, tangential zu einer solchen Kegelfläche angeordnet sein oder dergleichen.

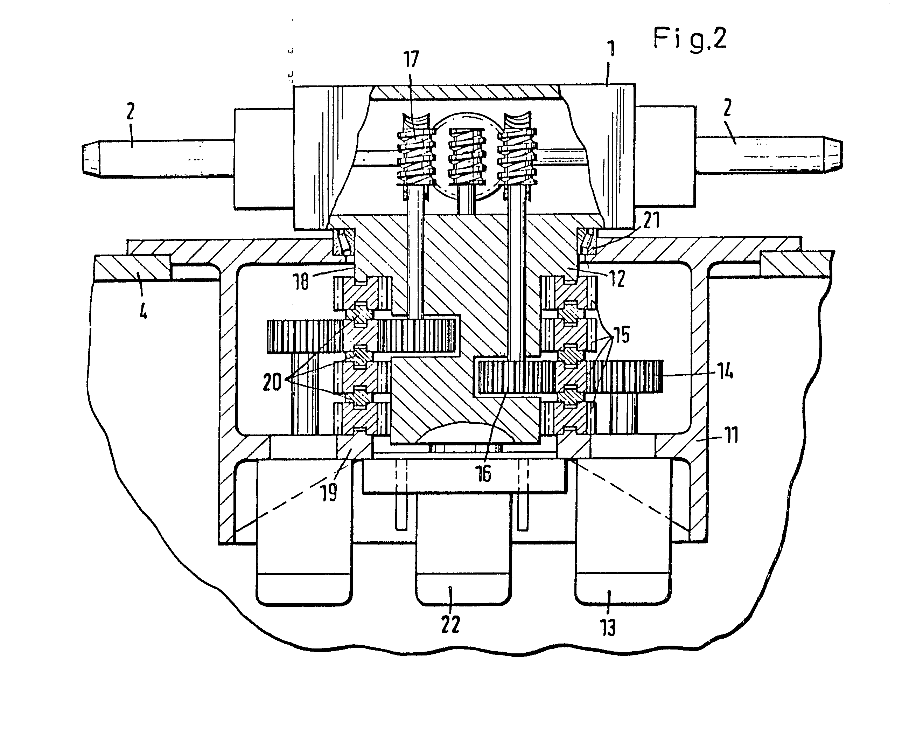

Die Fig. 2 ist eine teilweise im Schnitt dargestellte Seitenansicht einer Ausführungsform des Automaten, bei der die Achsen der Spindeln 2 gleichfalls in einer zu einer Schwenkachse 12 senkrechten Ebene liegen und radial von der Schwenkachse 12 weg ragen. Die Schwenkwelle bzw. Schwenkachse 12 des Spindelkopfs 1 sitzt dabei in einer Lagertrommel 11, an deren Bodenplatte ortsfest Spindelantriebs-Motoren 13 befestigt sind. An Ausgangswellen dieser Motoren 13 angeschlossene Abtriebsritzel 14 kämmen jeweils mit einem Umlaufzahnrad 15, das wiederum mit einem Treibritzel 16 für eine der Spindeln 2 kämmt. Hierzu sind nach Fig. 2 die Umlaufzahnräder 15 mit einer Außenverzahnung und einer Innenverzahnung versehen. Von dem Treibritzel 16 wird eine Drehung des jeweiligen Motors 13 über einen Winkeltrieb 17 zu der zugeordneten Spindel 2 übertragen. Im dargestellten Fall ist der Winkeltrieb 17 durch eine mit der Achse des Treibritzels 16 verbundene Schnecke und ein mit dieser kämmendes Rad an der Welle der jeweiligen Spindel 2 gebildet. Als Win-

0011256

keltrieb 17 können jedoch auch Kegelräder oder dergleichen verwendet werden, was insbesondere dann von Bedeutung ist, wenn die Spindelachsen beispielsweise auf einer zur Schwenkachse 12 koaxialen Kegelfläche liegen. Die Umlaufzahnräder 15 sind übereinander gestapelt zwischen einem an der Schwenkachse 12 ausgebildeten Ringflansch 18 und einem an der Lagertrommel 11 ausgebildeten Lagerring 19 angeordnet, wobei zwischen benachbarte Umlaufzahnräder 15 Lagerkränze 20 gesetzt sind. Die Abtriebsritzel 14 sitzen in Ausnehmungen der Schwenkachse 12, während ihre Wellen durch die Schwenkachse 12 hindurch parallel zur Achse für die Verschwenkung des Spindelkopfs 1 ragen. Der Spindelkopf 1 bzw. seine Schwenkachse 12 ist an der Lagertrommel über ein Kegellager 21 drehbar gelagert. Das Verschwenken des Spindelkopfs 1 erfolgt mittels eines an die Schwenkachse 12 angeschlossenen Fortschalt-Motors 22, der an dem Boden der Lagertrommel 11 befestigt ist. Die Lage der Achsen der Spindeln 2 an den jeweiligen Stationen 5 bis 8 wird mittels einer nicht gezeigten Rastvorrichtung festgelegt, die zum Verschwenken des Spindelkopfs 1 aus der Verriegelungsstellung gelöst wird.

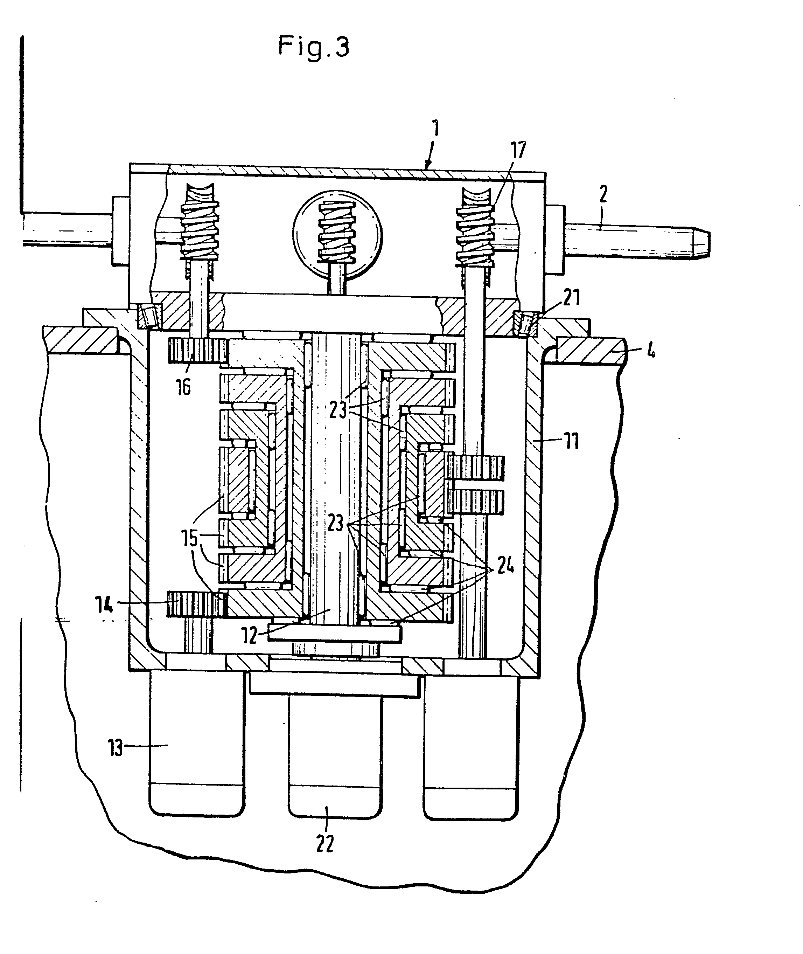

Die Fig. 3 zeigt ein zweites Ausführungsbeispiel für die Spindelstell- und -antriebseinrichtung des Automaten. Dabei sind für gleiche oder gleichartige Bauteile wie in Fig. 2 die gleichen Bezugszeichen verwendet. Diese Ausführung unterscheidet sich von derjenigen nach Fig. 2 dadurch, daß zwischen die Abtriebsritzel 14 und die Treibritzel 16 Umlaufzahnräder 15' gesetzt sind, die Zylinder aufweisen, an deren Enden Zahnkränze mit Außenverzahnungen zum Kämmen mit dem Abtriebsritzel 14 oder dem Treibritzel 16 sitzen. Die Zylinder dieser Umlaufzahnräder 15' haben bei den einzelnen Umlaufzahnrädern stufenweise in der Weise vergrößerte Durchmesser, daß sie unter Zwischensetzen von Zwischenlagern 23 auf die Schwenkachse

0011256

12 und danach aufeinander aufgeschoben werden können. Die Zahnkränze aller Umlaufzahnräder 15' haben den gleichen Teilungs- bzw. Außendurchmesser. Zwischen benachbarten Zahnkränzen verschiedener Umlaufzahnräder 15' sind Scheibenlager 24 gesetzt. Am oberen und unteren Ende des auf diese Weise gebildeten Zylinderbündels mit den entsprechenden Zahnkränzen sind die Stirnseiten der außenliegenden Zahnkränze gegen an der Schwenkachse 12 ausgebildete Flanschen gleichfalls mit Scheibenlagern 24 drehbar gelagert. In der Darstellung sind zwar die Umlaufzahnräder 15' als eine Einheit dargestellt, jedoch müssen selbstverständlich zumindest die unten liegenden Zahnkränze vom Zylinder lösbar sein, um eine Montage dieses Zylinderbündels zu ermöglichen. Das mittlere Umlaufzahnrad 15' mit dem größten "Zylinder"-Durchmesser ist praktisch lediglich durch die miteinander verbundenen Zahnkränze gebildet, die damit auch den Zylinder bilden.

Bei diesem Ausführungsbeispiel sind die Wellen der Treibritzel 16 in einem den Übergang zwischen Spindelkopf 1 und Schwenkachse 12 bildenden Flansch gelagert und liegen auf dem gleichen Umkreis zur Schwenkachse 12 wie die Achsen der Abtriebsritzel 14. Selbstverständlich müssen dabei die Abtriebsritzel 14 außerhalb des Schwenkbereichs der Treibritzel 16 liegen, was beim ersten Ausführungsbeispiel durch ihre Anordnung innerhalb der Umlaufzahnräder 15 im Gegensatz zur Anordnung der Abtriebsritzel 14 außerhalb derselben erfolgt.

Hinsichtlich des weiteren konstruktiven Aufbaues entspricht dieses Ausführungsbeispiel dem ersten Ausführungsbeispiel, so daß hier weitere Erläuterungen weggelassen sind.

TIEDTKE - BÜHLING - KINNE

Dipl.-Ing. H. Tiedtke
Dipl.-Chem. G Bühling
Dipl.-Ing. R. Kinne
Dipl.-Ing. B. Pellmann

Bavariaring 4, Postfach
8000 München 2
Tel.: 089 - 53 96 53
Telex: 5-24 845 tipat
cable: Germaniapatent

00 11 256

## Patentansprüche

1. Bearbeitungsautomat, insbesondere zur Herstellung von Spiralbohrern, Fräsern, Reibahlen oder ähnlichen Werkzeugen mit mehreren, in einem Schalttisch gelagerten Spindeln zur Aufnahme von Werkstücken, die durch Schwenken des Schalttisches von einer Werkstück-Wechselstation über mehrere Bearbeitungsstationen zur Wechselstation zurück fortschaltbar sind, wobei jede der Spindeln mittels eines eigenen Spindelantriebs-Motors antreibbar ist, dadurch gekennzeichnet, daß jeder Spindelantriebs-Motor (13) ortsfest angebracht ist und sein Abtriebsritzel (14) mit einem Treibritzel (16) der zugeordneten Spindel (2) über ein Umlaufzahnrad (15; 15') verbunden ist, das zur Schwenkachse (12) des Schalttisches (1) koaxial gelagert ist und das an jeweils einer Verzahnung mit dem Abtriebsritzel sowie dem Treibritzel kämmt.

2. Automat nach Anspruch 1, dadurch gekennzeichnet, daß jedes Umlaufzahnrad (15) eine Innen- und eine Außenverzahnung hat, an denen es mit dem Treibritzel (16) und dem Abtriebsritzel (14) kämmt.

3. Automat nach Anspruch 2, dadurch gekennzeichnet, daß alle Umlaufzahnräder (15) gleiche Durchmesser haben.

Deutsche Bank (Munchen) Kto 51/61 070          Dresdner Bank (Munchen) Kto. 3939 844          Postscheck (Munchen) Kto 670-43-804

4. Automat nach Anspruch 2 oder 3, dadurch gekennzeichnet, daß die Umlaufzahnräder (15) unter Zwischensetzen von Lagerkränzen (20) in einem Stapel angeordnet sind.

5. Automat nach Anspruch 4, dadurch gekennzeichnet, daß zumindest ein äußeres Umlaufzahnrad (15) des Stapels an einer Lagertrommel (11) gelagert ist, an der die Schwenkachse (12) des Schalttisches (1) gelagert ist und die Spindelantriebs-Motoren (13) befestigt sind.

6. Automat nach Anspruch 4 oder 5, dadurch gekennzeichnet, daß zumindest ein äußeres Umlaufzahnrad (15) des Stapels an einem an der Schwenkachse (12) des Schalttisches (1) ausgebildeten Ringflansch (18) gelagert ist.

7. Automat nach Anspruch 1, dadurch gekennzeichnet, daß jedes Umlaufzahnrad (15') aus einem Zylinder gebildet ist, an dessen Enden außen verzahnte Zahnkränze sitzen, wobei die Zylinder der einzelnen Umlaufzahnräder gestuft vergrößerte Durchmesser in der Weise haben, daß die Zylinder koaxial übereinander sitzen.

8. Automat nach Anspruch 7, dadurch gekennzeichnet, daß die Zahnkränze der Umlaufzahnräder (15') gleiche Außendurchmesser haben.

9. Automat nach Anspruch 7 oder 8, dadurch gekennzeichnet, daß die Zahnkränze des Umlaufzahnrads (15') mit dem Zylinder größten Durchmessers zur Bildung eines einzigen Zahnkranzes ineinander übergehen.

0011256

10. Automat nach einem der Ansprüche 7 bis 9, dadurch gekennzeichnet, daß zwischen benachbarte der koaxial übereinander sitzenden Zylinder Zylinderlager (13) gesetzt sind.

11. Automat nach einem der Ansprüche 7 bis 10, dadurch gekennzeichnet, daß zwischen die Zahnkränze von benachbarten der koaxial übereinander sitzenden Zylinder Scheibenlager (24) gesetzt sind.

12. Automat nach einem der vorangehenden Ansprüche, dadurch gekennzeichnet, daß bei der Steuerung der Spindelantriebs-Motoren (13) die durch das Schwenken des Schalttisches (1) entstehende Drehung der Spindel (2) programmiert berücksichtigt ist.

13. Automat nach einem der vorangehenden Ansprüche, dadurch gekennzeichnet, daß an jedem der Spindelantriebs-Motoren (13) ein Meßsystem mit einem Stellungsgeber und/oder einem Tachogenerator angebracht ist.

Fig.1

Fig. 2

Fig.3

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>US - A - 3 315 542</u> (FORTIN)<br>* Spalte 2, Zeilen 27-49 *<br><br>-- | 1,7,11 |
| | <u>GB - A - 21 522/1914</u> (MARKS)<br>* Seite 2, Zeilen 29-36 *<br><br>-- | 2 |
| A | <u>US - A - 1 967 689</u> (SCHAUER)<br><br>---- | |

**KLASSIFIKATION DER ANMELDUNG (Int.Cl. 3)**

B 23 Q 39/04
F 16 H 1/00
B 23 Q 1/16

**RECHERCHIERTE SACHGEBIETE (Int. Cl. 3)**

B 23 Q 39/04
1/16
F 16 H 1/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie. Übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-02-1980 | DE GUSSEM |

EPA form 1503.1   06.78